# EUROPÄISCHE PATENTSCHRIFT

(11) **EP 3 068 641 B1**
(45) Veröffentlichungstag und Bekanntmachung des Hinweises auf die Patenterteilung: **25.04.2018**
(21) Anmeldenummer: 14796712.9
(22) Anmeldetag: 07.11.2014
(51) Int. Cl.: B60G 17/0165, B60G 17/018

(54) **VERFAHREN UND SYSTEM ZUM KONTROLLIEREN EINES AKTORS**
METHOD AND SYSTEM FOR CONTROLLING AN ACTUATOR
PROCÉDÉ ET SYSTÈME DE CONTRÔLE D'UN ACTIONNEUR

(30) Priorität: 13.11.2013 DE 102013018924
(43) Veröffentlichungstag der Anmeldung: 21.09.2016
(73) Patentinhaber: Audi AG, 85045 Ingolstadt (DE)
(72) Erfinder: GÖHRLE, Christoph, 85049 Ingolstadt (DE); SCHINDLER, Andreas, 85055 Ingolstadt (DE); UNGER, Andreas, 85080 Gaimersheim (DE); SAWODNY, Oliver, 70186 Stuttgart (DE)
(74) Vertreter: Reichert, Thomas Klaus
(86) Internationale Anmeldenummer: PCT/EP2014/002993
(87) Internationale Veröffentlichungsnummer: WO 2015/070966

(56) Entgegenhaltungen:
- EP-A1- 0 412 719
- DE-A1- 4 119 494
- DE-A1-102006 010 101
- GB-A- 2 494 528
- JP-A- 2000 074 682
- US-A1- 2009 097 038
- US-A1- 2013 103 259

## Beschreibung

Die Erfindung betrifft ein Verfahren und ein System zum Kontrollieren mindestens eines Aktors eines Fahrwerks eines Kraftfahrzeugs.

Ein Kraftfahrzeug umfasst unterschiedliche Sensoren zum Erfassen von Betriebsparametern und eines Umfelds, insbesondere einer Straße, vor dem Kraftfahrzeug sowie unterschiedliche Aktoren zum Beaufschlagen von Komponenten des Kraftfahrzeugs. Eine Stellgröße zum Beaufschlagen einer Komponente durch einen Aktor ist dabei aus mindestens einem Wert eines Sensors abzuleiten.

Die Druckschrift WO 2009/097947 A1 beschreibt ein Verfahren zur Beeinflussung eines aktiven Fahrwerks eines Fahrzeugs, wobei ein Höhenprofil einer Fahrbahn ermittelt und das Fahrwerk abhängig von ermittelten Werten des Höhenprofils beeinflusst wird. Aus dem Höhenprofil wird in einem zur Filterung vorgesehenen Schritt des Verfahrens ein gefiltertes Höhenprofil gebildet, aus dem eine gewünschte Position eines Aufbaus des Fahrzeugs und/oder eine Sollgröße hierfür ermittelt wird bzw. werden.

Aus der Druckschrift DE10 2008 032 545 A1 ist ein Beeinflussungssystem eines aktiven Fahrwerks eines Kraftfahrzeugs bekannt, mit dem aus einer Vorsteuergröße ein Eingangssignal für eine Aufbauregelung des Fahrwerks berechnet wird. Außerdem ist vorgesehen, ein Verhalten des Kraftfahrzeugs zu jedem Zeitpunkt anhand eines Modells vorherzusagen und mit einem tatsächlichen Verhalten des Kraftfahrzeugs zu vergleichen.

Aus der Druckschrift EP 0 412 719 A1 ist ein Erfassungssystem für eine Straßenoberfläche für ein Fahrzeug mit einem Sender zum Richten elektromagnetischer Strahlung auf die Straßenoberfläche vor dem Fahrzeug und einem Empfänger zum Empfangen reflektierter Strahlung beschrieben. Hierbei ist der Empfänger dazu eingerichtet, eine Amplitudenmodulation der reflektierten Strahlung zu erfassen, deren Träger in Übereinstimmung mit Unregelmäßigkeiten der Oberfläche amplitudenmoduliert ist. Das System weist außerdem eine Einrichtung zum Differenzieren des Modulationssignals auf, um ein Steuersignal zu erzeugen, das den Straßenoberflächenzustand wiedergibt. Eine Fahrzeugsystemsteuerung ist dazu eingerichtet, das Steuersignal zu empfangen und den Betrieb des Fahrzeugsystems in Abhängigkeit von dem Steuersignal zu verändern. Das Dokument EP0412719 A1 offenbart den Oberbegriff der Ansprüche 1 und 10. Ein Aufhängungs-Regelsystem für ein Kraftfahrzeug ist in der Druckschrift DE 41 19 494 A1 beschrieben. Dieses Regelsystem umfasst einen Straßenoberflächensensor zur Erfassung einer unebenen Oberfläche an einem in einem bestimmten Abstand vor dem Kraftfahrzeug gelegenen Straßenabschnitt, wobei der Straßenoberflächensensor ein Ausgangssignal entsprechend einer erfassten Unebenheit der Straßenoberfläche erzeugt. Hierbei wird das Ausgangssignal ebenfalls ausgewertet.

In der Druckschrift US 2009/097038 A1 ist beschrieben, eine von einem Kraftfahrzeug zu befahrende Straße mit einem Sensor zu erfassen und sensorisch erfasste Signale auszuwerten, auf Grundlage derer eine Dämpfung des Kraftfahrzeugs eingestellt wird.

Aus der Druckschrift US 2013/103259 A1 ist ein Verfahren zur Verwendung mit einem Fahrzeug-Aufhängungssystem bekannt, wobei Straßeninformationen von einem Sichtsystem empfangen werden. Dieses Sichtsystem umfasst mehrere Kameras, wobei eine Ausgabe der Kameras in ein gemischtes digitales Bild zusammengemischt wird, wobei die Straßeninformationen aus dem gemischten digitalen Bild entnommen werden.

Vor diesem Hintergrund werden ein Verfahren und ein System mit den Merkmalen der unabhängigen Patentansprüche vorgestellt. Weitere Ausgestaltungen der Erfindung gehen aus den abhängigen Patentansprüchen und der Beschreibung hervor.

Das erfindungsgemäße Verfahren ist zum Kontrollieren mindestens eines Aktors eines Fahrwerks eines Kraftfahrzeugs, mit dem ein Untergrund befahren wird, ausgebildet. Hierbei wird ein Höhenprofil des Untergrunds erfasst, wobei für einen Abschnitt des Untergrunds analysiert wird, ob das Höhenprofil entlang dieses Abschnitts einen Wert aufweist, der um einen vorgegebenen Toleranzwert von einem vorgegebenen Schwellwert abweicht. Eine Stellgröße zum Beaufschlagen des mindestens einen Aktors wird unter Berücksichtigung der identifizierten Unebenheit eingestellt, wenn das Kraftfahrzeug über die identifizierte Unebenheit fährt. Erfindungsgemäß wird der Abschnitt des Untergrunds als Unebenheit definiert, wenn der Wert des Höhenprofils größer als der Schwellwert zuzüglich des Toleranzwerts ist. Erfindungsgemäß wird eine Form des Höhenprofils entlang des Abschnitts durch eine Funktion beschrieben, wobei diese Funktion von mindestens einem Parameter abhängig ist. Mit der von dem mindestens einen Parameter abhängigen Funktion zum Beschreiben des Höhenprofils wird eine Abhängigkeit des Höhenprofils für einen Punkt des Untergrunds von einer Position des Punkts entlang des Abschnitts definiert.

Werte des Höhenprofils für den Untergrund werden mit einem Sensor zum Erfassen eines Umfelds des Kraftfahrzeugs ermittelt. Die ermittelten Werte werden entlang des Abschnitts gefiltert.

Sämtliche Werte des Höhenprofils, wobei ein Wert des Höhenprofils einem Punkt x entlang eines Abschnitts zugeordnet wird, werden durch einen Sensor zum Erfassen eines Umfelds des Kraftfahrzeugs ermittelt. Sämtliche ermittelten Werte des Höhenprofils für alle Punkte entlang des Abschnitts werden gefiltert, bspw. hochpassgefiltert oder tiefpassgefiltert.

Eine identifizierte Unebenheit des Höhenprofils wird mit dem mindestens einen Aktor ausgeglichen. Falls keine Unebenheit entdeckt wird, wird das Höhenprofil auf einen konstanten Wert, z. B. auf Null gesetzt, und/oder die Vorausschaufunktion deaktiviert, da in diesem Fall von einem ebenen Untergrund, der einem Messrauschen unterworfen ist, ausgegangen wird.

Der Abschnitt wird erfindungsgemäß als Unebenheit des Untergrunds identifiziert, wenn ein Wert einer Änderung der Funktion in Abhängigkeit der Position des Punkts entlang des Abschnitts um einen vorgegebenen Toleranzwert von einem vorgegebenen Schwellwert für die Änderung der Funktion abweicht. Dabei kann als Änderung der Funktion deren erste örtliche Ableitung in horizontaler Richtung entlang des Abschnitts verwendet werden. Alternativ oder ergänzend kann als Änderung der Funktion deren zweite örtliche Ableitung in horizontaler Richtung entlang des Abschnitts verwendet werden.

Für eine identifizierte Unebenheit werden in horizontaler Richtung entlang des Abschnitts ein Anfang und ein Ende bestimmt. Der Anfang und das Ende können über eine gradientenbasierte Variante des Verfahrens bestimmt werden, wobei aus den tiefpass- oder hochpassgefilterten Werten des Höhenprofils die Funktion zum Beschreiben des Höhenprofils ermittelt wird. Außerdem werden Extrema der Funktion sowie der ersten und zweiten Ableitung der Funktion untersucht.

Dabei kann nach Knicken und/oder Ecken im Höhenprofil gesucht werden, wobei derartige Knicke und/oder Ecken als Anfang oder Ende einer identifizierten Unebenheit definiert werden. Entlang des phasenfrei tiefpassgefilterten Höhenprofils können Minima und Maxima der ersten und/oder zweiten Ableitung der Funktion gesucht werden. Ein Anfang oder ein Ende der Unebenheit wird über ein Abweichen der ersten und/oder zweiten Ableitung um den Toleranzwert von dem Schwellwert identifiziert. Alternativ dazu kann das Höhenprofil mit einer entsprechenden Gewichtsfunktion gefaltet werden, was einer Anwendung eines moving average Filters (gewichteter gleitender Mittelwert) des Höhenprofils mit der definierten Gewichtungsfunktion entspricht.

Somit kann durch Analyse einer ersten und/oder zweiten Ableitung der Funktion zum Beschreiben des Höhenprofils und durch Vergleich mit einem vorgegebenen Schwellwert überprüft werden, ob entlang eines analysierten Abschnitts eine Unebenheit vorliegt und wo diese anfängt und endet.

In Ausgestaltung wird das Höhenprofil zur Erkennung definierter Unebenheiten, wie voranstehend bereits erwähnt, zunächst durch eine Hoch- und Tiefpassfilterung vorbearbeitet, so dass das Höhenprofil um eine Nulllinie verläuft. Dann werden Werte gesucht, die zumindest um den Schwellwert größer als der definierte Toleranzwert sind. Ausgehend von derartigen Werten wird das örtliche Höhenprofil so lange nach rechts und nach links durchsucht, bis Werte des Höhenprofils den Toleranzwert zuzüglich des Schwellwerts unterschreiten, also z. B. kleiner als 0,5 cm werden, oder bis ein weiterer charakteristischer Schwellwert erreicht wird, wenn z. B. die gefilterte erste Ableitung eine Vorzeichenwechsel und die zweite gefilterte Ableitung ein Extremum aufweist, wodurch der Anfang und das Ende der Unebenheit erkannt werden kann.

Wie nachstehend detaillierter erläutert, kann ferner zum Identifizieren von Unebenheiten ein Vergleich von gemessenen absoluten Werten des Höhenprofils, das anhand einer Ist-Geometrie beschrieben wird, mit vorgegebenen Werten eines anhand einer Soll-Geometrie darstellbaren Höhenprofils durchgeführt werden.

Diesbezüglich wird bei dem Verfahren zum Kontrollieren des mindestens einen Aktors analysiert, ob das Höhenprofil entlang des Abschnitts eine Ist-Geometrie mit einer Form aufweist, die mit einer Form einer Soll-Geometrie vergleichbar ist. Dabei wird mit der von dem mindestens einen Parameter abhängigen Funktion erfindungsgemäß die Ist-Geometrie des Höhenprofils beschrieben, wobei die Ist-Geometrie mit der für das Höhenprofil vorgesehenen Soll-Geometrie verglichen wird. Der Abschnitt wird als Unebenheit des Untergrunds identifiziert, wenn die Ist-Geometrie um einen für die Soll-Geometrie vorgegebenen Toleranzwert von einem für die Soll-Geometrie vorgegebenen Schwellwert abweicht. Sowohl die Form der Ist-Geometrie als auch eine Form der Soll-Geometrie werden durch die von dem mindestens einen Parameter abhängige Funktion zum Beschreiben des Höhenprofils entlang des Abschnitts definiert, wobei der mindestens eine Parameter der Funktion zum Beschreiben der Ist-Geometrie einen Ist-Wert und zum Beschreiben der Soll-Geometrie einen Soll-Wert aufweist.

Die Soll-Geometrie kann außerdem als Schablone für die Ist-Geometrie verwendet werden.

Somit können unterschiedliche Soll-Geometrien mit unterschiedlichen Formen verwendet werden. Derartige Soll-Geometrien können auch als vorgegebene bzw. definierte Geometrien bezeichnet werden. Zur Suche der Unebenheit in dem Höhenprofil wird das üblicherweise sensorisch erfasste Höhenprofil durch die Ist-Geometrie dargestellt. Weiterhin können sämtliche vorgegebenen bzw. definierten Soll-Geometrien mit der erfassten Ist-Geometrie des Höhenprofils verglichen werden. Sobald für eine Ist-Geometrie entlang eines Abschnitts des Höhenprofils eine von der Form her passende Soll-Geometrie aus einer Vielzahl von Soll-Geometrien ermittelt worden ist, wird überprüft, ob und inwiefern die Form der Ist-Geometrie von der Form der Soll-Geometrie abweicht.

In Ausgestaltung des Verfahrens ist die zum Beschreiben der Ist-Geometrie und der Soll-Geometrie vorgesehene Funktion als Polynom n-ten Grades ausgebildet. Für eine von mindestens einem Parameter aₖ abhängige, als Polynom ausgebildete Funktion h(x), die mindestens ein Glied aₖ*x^{k} aufweist, wobei ein Parameter aₖ einer k-ten Potenz von x zugeordnet ist, gilt üblicherweise: h(x) = aₙ*xⁿ + aₙ₋₁*xⁿ⁻¹ + ... aₖ*x^{k} + ... a₂*x² + a₁*x + a₀. Hierbei ist x als Variable vorgesehen, die sich im Rahmen des Verfahrens für einen Ort bzw. eine Position entlang des Höhenprofils oder zumindest entlang des zu analysierenden Abschnitts des Höhenprofils erstreckt. Bei einer Untersuchung eines Abschnitts des Höhenprofils werden zum Beschreiben der Funktion zur Darstellung der Soll-Geometrie als Soll-Werte vorgesehene und/oder definierbare Parameter a_{k,soll} = a_{n,soll,} a_{n-1,soll}, ..., a_{s,soll}, a_{1,soll,} a_{0,soll} verwendet. Dagegen werden für die parameterabhängige Funktion zum Beschreiben der Ist-Geometrie als Ist-Werte vorgesehene und/oder zu ermittelnde Parameter a_{k,ist} = a_{n,ist}, a_{n-1,ist}, ..., a_{2,ist}, a_{1,ist}, a_{0,ist} verwendet. Bei einer Durchführung des Verfahrens ist es auch möglich, eine möglicherweise vorhandene Unebenheit aufgrund eines Vergleichs der als Soll-Werte vorgesehenen Parameter a_{k,soll} der Funktion zum Beschreiben der Soll-Geometrie mit den als Ist-Werte ausgebildeten Parametern a_{k,ist} der Funktion zum Beschreiben der Ist-Geometrie zu ermitteln, wobei eine Unebenheit dadurch identifizierbar ist, wenn ein Ist-Wert eines Parameters a_{k,ist} für eine k-te Potenz der Funktion für die Ist-Geometrie zumindest um einen vorgegebenen Schwellwert von einem Toleranzwert eines als Soll-Wert ausgebildeten Parameters a_{k,soll} für eine k-te Potenz der Funktion zum Beschreiben der Soll-Geometrie abweicht. Erfindungsgemäß wird eine derartige Funktion als trigonometrische Funktion ausgebildet. Mit der parameterabhängigen Funktion h(x) zum Beschreiben des Höhenprofils wird eine Abhängigkeit des Höhenprofils für einen Punkt x des Untergrunds von einer Position des Punkts x entlang des Abschnitts definiert.

Der analysierte Abschnitt wird als Unebenheit des Untergrunds identifiziert, wenn ein absoluter Wert der Funktion der Ist-Geometrie in einem Punkt x um einen für die Soll-Geometrie vorgegebenen Toleranzwert von einem für die Soll-Geometrie vorgegebenen Schwellwert abweicht. In Ausgestaltung wird die Soll-Geometrie über die Ist-Geometrie des Höhenprofils geschoben und für jeden Punkt entlang des Abschnitts eine Differenz zwischen der Soll-Geometire und der Ist-Geometrie berechnet. Weiterhin wird entlang des Abschnitts über sämtliche Differenzen summiert. Falls die gebildete Summe der Differenzen einen Schwellwert unterschreitet, wird eine sich entlang des Abschnitts erstreckende Unebenheit erkannt. In Ausgestaltung kann eine Unebenheit dadurch identifiziert werden, indem ein Fit-Wert zwischen der Soll-Geometrie und der Ist-Geometrie überschritten wird.

Hierbei wird der Abschnitt des Untergrunds als Unebenheit definiert wird, wenn der Wert der Funktion der Ist-Geometrie größer als der Schwellwert zuzüglich des Toleranzwerts der Soll-Geometrie ist. Demnach wird überprüft, inwiefern ein Wert für eine absolute Höhe des Höhenprofils, das durch die Ist-Geometrie beschrieben wird, von einem durch die Soll-Geometrie vorgegebenen Wert für die absolute Höhe abweicht. Folglich kann alternativ oder ergänzend vorgesehen sein, dass der Abschnitt des Untergrunds ggf. auch dann als Unebenheit definiert wird, wenn der Wert der Funktion der Ist-Geometrie kleiner als der Schwellwert abzüglich des Toleranzwerts der Soll-Geometrie ist.

In weiterer Ausgestaltung wird der Abschnitt als Unebenheit des Untergrunds identifiziert, wenn ein Wert einer Änderung der Funktion der Ist-Geometrie in Abhängigkeit der Position des Punkts entlang des Abschnitts um einen für die Soll-Geometrie vorgegebenen Toleranzwert von einem für die Soll-Geometrie vorgegebenen Schwellwert der Änderung der Funktion abweicht. Dabei wird der Abschnitt des Untergrunds als Unebenheit definiert, wenn der erfasste Wert der Änderung der Funktion der Ist-Geometrie größer als der Schwellwert zuzüglich des Toleranzwerts ist. Weiterhin wird als Änderung der Funktion deren erste örtliche Ableitung und/oder deren zweite örtliche Ableitung in horizontaler Richtung entlang des Abschnitts verwendet.

Für eine identifizierte Unebenheit werden in horizontaler Richtung entlang des Abschnitts ein Anfang und ein Ende bestimmt. Somit wird ermittelt, wo die Unebenheit anfängt und wo sie endet.

Außerdem kann die Soll-Geometrie als Schablone für die Ist-Geometrie verwendet werden, wobei diese Schablone auch zum Identifizieren eine Unebenheit verwendet wird.

Das erfindungsgemäße System ist zum Kontrollieren mindestens eines Aktors eines Fahrwerks eines Kraftfahrzeugs gemäß dem Anspruch 9 ausgebildet.

Mit diesem System, das in dem Kraftfahrzeug angeordnet ist, kann mindestens ein Schritt des vorgestellten erfindungsgemäßen Verfahrens durchgeführt werden.

Mit dem Verfahren wird eine Kontrolle und somit eine Steuerung und/oder Regelung für einen Aktor eines sogenannten vorausschauenden Fahrwerks bereitgestellt. Hierbei wird mit mindestens einem Sensor des Kraftfahrzeugs, der zu Erkennung des Umfelds des Kraftfahrzeugs ausgebildet ist, z. B. mit einem Mono-Sensor und/oder einem Stereo-Sensor, der das Umfeld auf Basis elektromagnetischer Wellen, bspw. video-, laser- oder radargestützt, erfasst, ein Höhenprofil eines vor dem Kraftfahrzeug befindlichen Untergrunds, in der Regel einer Straße, erkannt.

Rohdaten bzw. Werte des mindestens einen Sensors werden aufbereitet und daraus ein Höhenprofil zu diskreten Punkten jedes Untergrunds bereitgestellt. Dabei werden bspw. Werte für das Höhenprofil entlang des Untergrunds in einem Abschnitt von 0 m bis 20 m in Fahrtrichtung vor dem Kraftfahrzeug oder in einem Abschnitt von 15 m hinter dem Kraftfahrzeug bzgl. dessen Fahrtrichtung berücksichtigt, wobei derartige Werte des Höhenprofils äquidistant, für minimale Abschnitte von bspw. 10 cm, oder nicht-äquidistant vorliegen können. Das erfasste Höhenprofil des Untergrunds wird nur bei Auftreten einer größeren Unebenheit für die Regelung des mindestens einen Aktors verwendet, wobei eine größere Unebenheit in einer Ausgestaltung definitionsgemäß eine Höhe aufweist, deren Wert größer als ein Grenzwert ist und somit mindestens um einen definierten Toleranzwert von einem definierten Schnellwert abweicht. Demnach wird die vorausschauende Kontrolle bzw. Regelung für den Aktor nur nach Erkennung einer derartigen großen Unebenheit aktiviert. Erfasste kleinere Unebenheiten mit geringeren Werten für die Höhe können ggf. durch Rauschen in einem Sensor bedingt sein und geben somit nicht das reale Höhenprofil der Straße wieder, weshalb auf derartige kleine Unebenheiten nicht reagiert werden soll.

Im Rahmen des Verfahrens wird das Höhenprofil gemäß mindestens einer von drei möglichen zuvor beschriebenen Varianten bearbeitet, so dass entweder nur eine Variante oder eine Kombination mehrerer Varianten verwendet wird. Mit dem Verfahren werden definierte Unebenheiten in einem sensorisch erfassten Höhenprofil des Untergrunds detektiert.

Einer ersten Variante zufolge wird im erfassten Höhenprofil nach Unebenheiten mit definierten geometrischen Formen gesucht, die hier durch die vorgegebene Soll-Geometrie beschrieben werden. Dabei ist eine Unebenheit durch deren Länge L in horizontaler Richtung entlang des Abschnitts des Untergrunds sowie deren Höhe h in vertikaler Richtung zu definieren. Dabei können zum Suchen der Unebenheit Werte der Länge L und der Höhe h der geometrischen Form bzw. der Ist-Geometrie im Vergleich zu der Soll-Geometrie variiert werden. Außerdem werden Unebenheiten des Höhenprofils vor dem Kraftfahrzeug mit der vorgesehenen geometrischen Form und somit der Soll-Geometrie verglichen, wobei die geometrische Form d. h. die Soll-Geometrie bei einer Auswertung auf das durch die Ist-Geometrie zu beschreibende, erfasste Höhenprofil gelegt und bei einer möglichen Abweichung der Ist-Geometrie von der Soll-Geometrie mindestens eine Unebenheit des Höhenprofils ermittelt wird. Bei einer Abweichung wird keine Unebenheit erkannt, da eine Soll-Geometrie Unebenheiten darstellen kann. Hierzu wird die Soll-Geometrie zum Vergleich mit der Ist-Geometrie entlang der Ist-Geometrie nach links oder rechts verschoben. Hierbei können als Soll-Werte definierte Parameter für die Funktion zum Beschreiben der Soll-Geometrie angepasst werden. Falls die Abweichung der Ist-Geometrie von der Soll-Geometrie klein genug ist, wird das sensorisch erfasste Höhenprofil von Beginn bis Ende durch eine Schablone dargestellt und/oder die Schablone selbst als Höhenprofil für eine Regelung verwendet, wobei eine derartige Schablone anhand der Soll-Geometrie beschrieben bzw. dargestellt wird.

Gemäß einer zweiten Variante wird das Höhenprofil gedreht sowie phasenfrei hochpassgefiltert, wodurch ein Verdrehen bzw. ein Offset des Höhenprofils eliminiert wird. Danach wird nach Unebenheiten über Werte für die Höhe gesucht, die größer als ein für die Höhe festzulegender Grenzwert sind und somit zumindest um einen definierten Toleranzwert von einem definierten Schwellwert abweichen. Um einen Anfangs- und Endpunkt für eine Unebenheit festlegen zu können, wird das Höhenprofil, von einem maximalen Wert der Unebenheit ausgehend, entlang des Höhenprofils in horizontaler Richtung nach rechts und nach links untersucht, bis ein festzulegender Schwellwert bzw. Toleranzwert unterschritten wird und/oder sich eine Steigung des Höhenprofils umkehrt und/oder bis entlang des Höhenprofils eine vorgesehene Schwelle, die auf einen Knick oder eine Ecke hinweist, überschritten oder unterschritten wird, wodurch ein Anfangspunkt und ein Endpunkt der Unebenheit gefunden werden kann.

Bei einer dritten Variante wird das erfasste Höhenprofil phasenfrei tiefpassgefiltert, was ein Vorwärts-Rückwärts-Filtern, ein Moving-Average-Filtern, d. h. ein Filtern mit einem gleitenden Mittelwert-Filter bzw. einem gewichteten gleitenden Mittelwert-Filter und/oder eine Faltung mit einer Funktion umfassen kann. Außerdem wird eine Analyse der ersten und zweiten Ableitung dieses gefilterten Höhenprofils bzw. der Faltung des Höhenprofils mit der voranstehend erwähnten Funktion durchgeführt, deren Verlauf einem Verlauf des Höhenprofils entspricht. Daraus resultierende Kurven werden auf das Vorliegen von Maxima und Minima untersucht. Mindestens eine Ableitung, d. h. entweder nur die erste Ableitung, nur die zweite Ableitung oder beide Ableitungen, werden zur Bestimmung des Anfangs- und Endpunkts der Unebenheit benutzt. Ergänzend kann das Höhenprofil zusätzlich mit einer modifizierten Frequenz gefiltert werden und wiederum dessen erste und zweite Ableitung analysiert werden, wodurch ein Anfang und/oder Ende der Unebenheit bestimmt werden kann.

Neben der Kombination der Varianten ist zudem möglich, mindestens eine der vorgestellten Varianten zur Analyse des Höhenprofils mit videobasierten Informationen, die auf Farbänderungen der Straße hinweisen, zu kombinieren, um somit ergänzend auf ein Auftreten von Unebenheiten zu schließen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt unterschiedliche Beispiele für Soll-Geometrien einer Unebenheit eines Höhenprofils eines von einem Kraftfahrzeug zu befahrenden Untergrunds, die bei einer ersten Ausführungsform des erfindungsgemäßen Verfahrens berücksichtigt werden.
Figur 2 zeigt Diagramme zur Analyse eines Höhenprofils eines von einem Kraftfahrzeug zu befahrenden Untergrunds im Rahmen einer zweiten Ausführungsform des erfindungsgemäßen Verfahrens.
Figur 3 zeigt in schematischer Darstellung ein Kraftfahrzeug, mit einer Ausführungsform eines erfindungsgemäßen Systems.

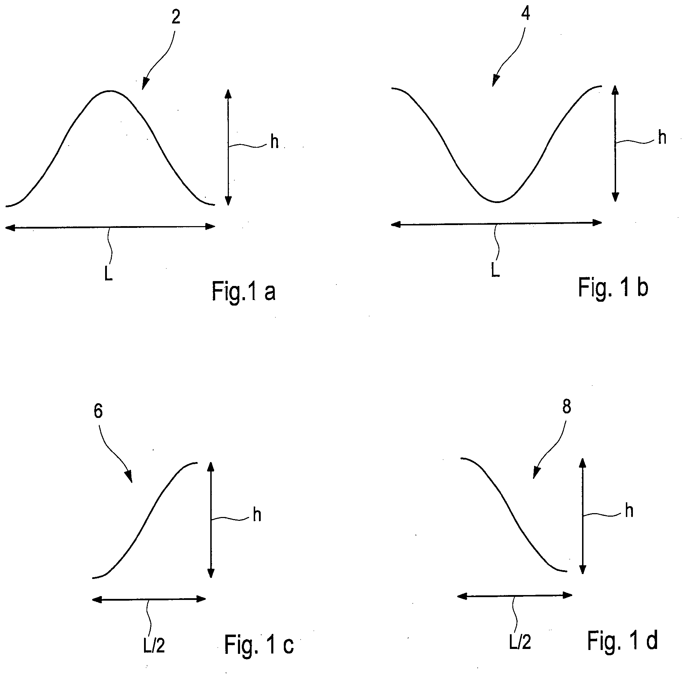

Die in den Figuren 1a, 1b, 1c und 1d dargestellten Beispiele für Unebenheiten 2, 4, 6, 8 entlang eines Höhenprofils eines Untergrunds, der von einem Kraftfahrzeug zu befahren ist, sind unter anderem durch deren Länge L in horizontaler Richtung entlang des Höhenprofils des Untergrunds sowie durch deren Höhe h in vertikaler Richtung senkrecht zu dem Höhenprofil und somit zu dem Untergrund definiert. Dabei zeigt Figur 1a eine positive Unebenheit 2, Figur 1b eine negative Unebenheit 4, Figur 1c eine als positive Kante ausgebildete Unebenheit 6 sowie Figur 1d eine als negative Kante ausgebildete Unebenheit 8.

Jede hier dargestellte Unebenheit 2, 4, 6, 8 weist eine definierte Geometrie und somit eine Soll-Geometrie auf, die durch eine parameterabhängige Funktion, bspw. ein von mindestens einen Parameter aₖ abhängiges Polynom n-ten Grades mit Gliedern aₖ*x^{k} dargestellt werden kann.

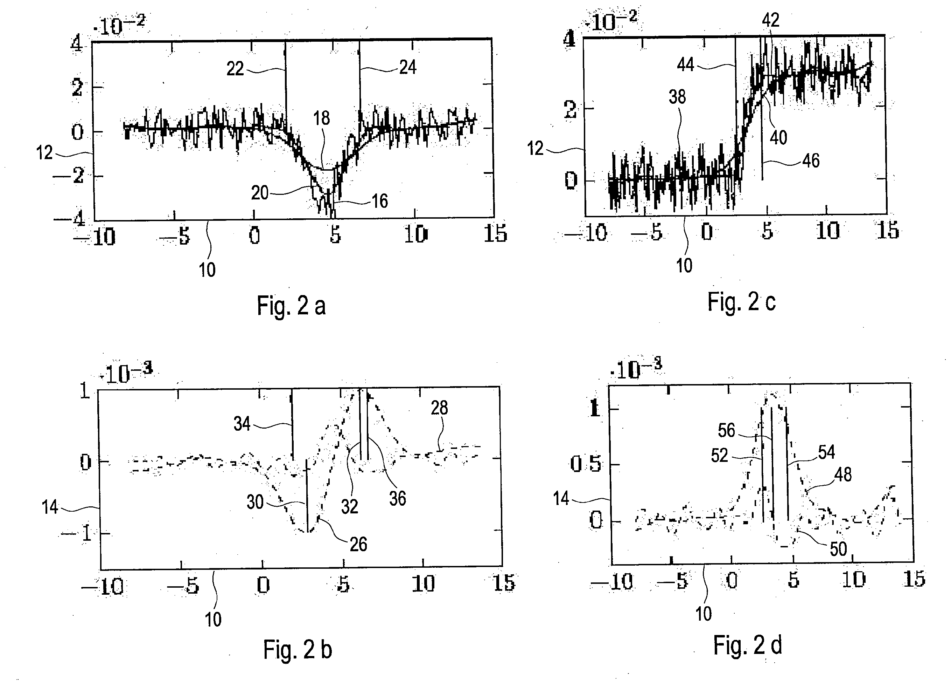

Sämtliche Diagramme aus den Figuren 2a, 2b, 2c und 2d umfassen jeweils eine Abszisse 10, entlang der Werte für eine Position x entlang eines von einem Kraftfahrzeug zu befahrenden Untergrunds in der Einheit cm aufgetragen sind. Die Diagramme aus den Figuren 2a und 2c umfassen eine Ordinate 12 entlang der Werte für eine Höhe eines Höhenprofils entlang des Untergrunds in der Einheit cm aufgetragen sind. In den Diagrammen aus den Figuren 2b und 2d sind entlang von Ordinaten 14 jeweils Werte einer örtlichen bzw. positionsabhängigen Änderung und somit ersten Ableitung der Werte des Höhenprofils in einer maßfreien Einheit dargestellt.

Hierbei ist es auch möglich, die Ist-Geometrie an das Höhenprofil des Untergrunds anzupassen. Dabei wird zum Darstellen der Ist-Geometrie oder der Soll-Geometrie eine trigonometrische Funktion h(x) verwendet, für die h(x) = hₘₐₓ (1 - cos(2πx/L)) für x ≤ L ≤ 0 und ansonsten h(x) = 0 gilt. Hierbei können Werte für hₘₐₓ, der einen zu definierenden maximalen Wert der Höhe beschreibt, und für L variiert, bspw. halbiert, werden. Eine vorgesehene Soll-Geometrie wird entlang der Ist-Geometrie verschoben, wobei eine Differenz zwischen der Ist- und der Soll-Geometrie berechnet wird. Aus aufsummierten, quadrierten Werten der Differenz kann durch Vergleich mit dem vorgesehenen Schwellwert eine Unebenheit identifiziert werden.

Das Diagramm aus Figur 2a zeigt eine erste Kurve 16, die auf sensorisch gemessenen Werten eines Höhenprofils, das hier eine positive Unebenheit aufweist, beruht. Eine zweite Kurve 18 in Figur 2a geht aus einer ersten Tiefpassfilterung der gemäß der ersten Kurve 16 dargestellten Werte des Höhenprofils und eine dritte Kurve 20 aus einer zweiten Tiefpassfilterung dieser Werte hervor. Außerdem zeigt das Diagramm aus Figur 2a eine erste und eine zweite, hier vertikale orientierte Begrenzungslinie 22, 24, die hier die Unebenheit entlang des Höhenprofils begrenzen.

In dem Diagramm aus Figur 2b sind örtliche Ableitungen und somit Gradienten der ersten tiefpassgefilterten Kurve 18 aus Figur 2a durch eine erste abgeleitete Kurve 26 und der zweiten tiefpassgefilterten Kurve 20 durch eine zweite abgeleitete Kurve 28 dargestellt. Weiterhin sind der ersten abgeleiteten Kurve 26 eine erste Begrenzungslinie 30 sowie eine zweite Begrenzungslinie 32 zugeordnet. Der zweiten abgeleiteten Kurve 28 sind eine erste Begrenzungslinie 34 und eine zweite Begrenzungslinie 36 zugeordnet. Dabei kennzeichnen diese Begrenzungslinien 30, 32, 34, 36 Extrema der Kurven 26, 28.

Das Diagramm aus Figur 2c zeigt eine erste Kurve 38, die auf sensorisch gemessenen Werten eines Höhenprofils, das hier eine positive Kante als Unebenheit aufweist, beruht. Eine zweite Kurve 40 in Figur 2c geht aus einer ersten Tiefpassfilterung der gemäß der ersten Kurve 38 dargestellten Werte des Höhenprofils und eine dritte Kurve 42 aus einer zweiten Tiefpassfilterung der Werte der zweiten Kurve 40 hervor. Außerdem zeigt das Diagramm aus Figur 2c eine erste und eine zweite, hier vertikale orientierte Begrenzungslinie 44, 46 die hier die Unebenheit entlang des Höhenprofils begrenzen.

In dem Diagramm aus Figur 2d sind örtliche Ableitungen und somit Gradienten der ersten tiefpassgefilterten Kurve 40 aus Figur 2c durch eine erste abgeleitete Kurve 48 und der zweiten tiefpassgefilterten Kurve 42 durch eine zweite abgeleitete Kurve 50 dargestellt. Weiterhin sind der ersten abgeleiteten Kurve 48 eine erste Begrenzungslinie 52 sowie eine zweite Begrenzungslinie 54 zugeordnet. Der zweiten abgeleiteten Kurve 50 ist hier eine Begrenzungslinie 56 zugeordnet.

Die in den Figuren 2a und 2c aufgrund sensorisch erfasster Werte des Höhenprofils dargestellten Kurven 16, 38 sowie die daraus durch ein- oder zweimalige Tiefpassfilterung abgeleiteten Kurven 18, 20, 40, 42 können durch eine Gewichtungsfunktion G(x) untersucht werden.

Die nachfolgende Tabelle 1 zeigt exemplarisch, wie mögliche Unebenheiten des Höhenprofils durch Auswerten der ersten oder zweiten Ableitung des gefilterten Höhenprofils, welches bspw. den Kurven 26, 28, 40, 42 aus den Figuren 2b und 2d entspricht, erkannt werden können, wobei eine Filterung des Höhenprofils mit einem moving average bzw. gewichteten gleitenden Mittelwert mit einer Gewichtungsfunktion G(x) durchgeführt wurde.

Diese Gewichtsfunktion G(x) wird dazu verwendet, das Höhenprofil und/oder die Funktion zum Beschreiben des Höhenprofils phasenfrei zu filtern und nach Extrema zu suchen, die darüber Auskunft geben, wo die Unebenheit anfängt und endet. Dabei kann G(x) eine Gauss-Funktion sein.

**(Tabelle 1)**

| | | |
|---|---|---|
| Analyse der ersten | Analyse der zweiten | |
| Ableitung des gefilterten Höhenprofils | Ableitung des gefilterten Höhenprofils | Unebenheiten |
| {max min} | {max min max} | positive Unebenheit begrenzt durch [max max] der zweiten Ableitung des gefilterten Höhenprofils |
| {min max} | {min max min} | negative Unebenheiten begrenzt durch [min min] von der zweiten Ableitung des gefilterten Höhenprofils |
| {max} | {max min} | positive Kante begrenzt durch [max min] von der zweiten Ableitung des gefilterten Höhenprofils |
| {min} | {min max} | negative Kante begrenzt durch [min max] von der zweiten Ableitung des gefilterten Höhenprofils |

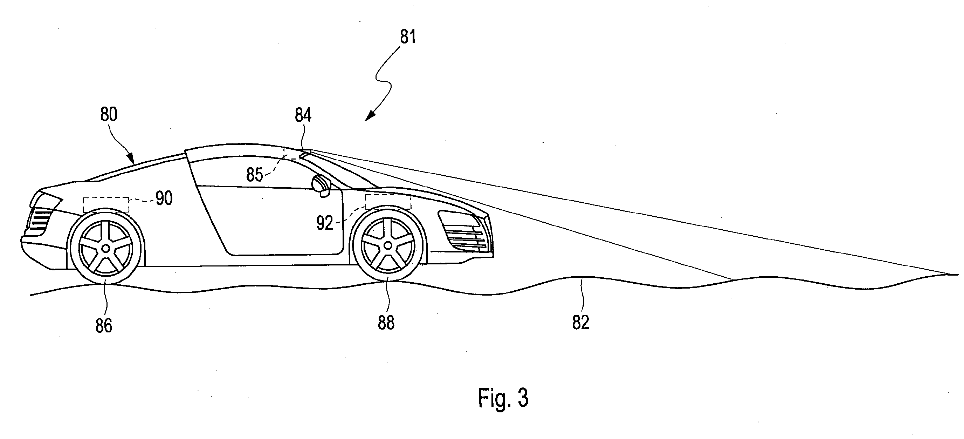

Figur 3 zeigt in schematischer Darstellung ein Kraftfahrzeug 80, das entlang eines Untergrunds 82 fährt. Dieses Kraftfahrzeug 80 weist eine Ausführungsform des erfindungsgemäßen Systems 81 mit einem Sensor 84 und einer Datenverarbeitungseinrichtung 85 auf. Der Sensor 84 ist dazu ausgebildet, ein Umfeld des Kraftfahrzeugs 80 auf Basis elektromagnetischer Wellen zu analysieren und hierbei ein Höhenprofil des Untergrunds 82 zu erfassen. Die Datenverarbeitungseinrichtung 85 ist dazu ausgebildet, eine Ist-Geometrie des Höhenprofils zu ermitteln und mit einer definierten Soll-Geometrie zu vergleichen. Beispiele für Soll-Geometrien sind hier in einem Speicher der Datenverarbeitungseinrichtung 85 abgelegt. Außerdem umfasst das Kraftzeug 80 mehrere Räder 86, 88, von denen in Figur 3 lediglich zwei dargestellt sind. Weiterhin ist vorgesehen, dass jedem Rad 86, 88 ein Aktor 90, 92 als eine Komponente eines Fahrwerks des Kraftfahrzeugs 80 zugeordnet ist, wobei jeweils ein Aktor 90, 92 einem Rad 86, 88 zugeordnet und dazu ausgebildet ist, dieses Rad 86, 88 in Abhängigkeit einer entlang des Untergrunds 82 identifizierten Unebenheit zu beaufschlagen.

## Patentansprüche

1. Verfahren zum Kontrollieren mindestens eines Aktors (90, 92) eines Fahrwerks eines Kraftfahrzeugs (80), mit dem ein Untergrund (82) befahren wird, bei dem ein Höhenprofil des Untergrunds (82) erfasst wird, wobei für einen Abschnitt des Untergrunds (82) analysiert wird, ob das Höhenprofil entlang dieses Abschnitts einen Wert aufweist, der um einen vorgegebenen Toleranzwert von einem Schwellwert abweicht, und wobei eine Stellgröße zum Beaufschlagen des Aktors (90, 92) unter Berücksichtigung einer identifizierten Unebenheit (2, 4, 6, 8) eingestellt wird, wenn das Kraftfahrzeug (80) über die identifizierte Unebenheit (2, 4, 6, 8) fährt, wobei der Abschnitt des Untergrunds (82) als Unebenheit (2, 4, 6, 8) definiert wird, wenn der Wert des Höhenprofils größer als der Schwellwert zuzüglich des Toleranzwerts ist,
**dadurch gekennzeichnet, dass**
eine Form des Höhenprofils entlang des Abschnitts durch eine trigonometrische Funktion beschrieben wird, wobei diese Funktion von mindestens einem Parameter abhängig ist und eine Abhängigkeit des Höhenprofils für einen Punkt des Untergrunds (82) von einer Position des Punkts entlang des Abschnitts definiert, wobei der Abschnitt als Unebenheit (2, 4, 6, 8) des Untergrunds (82) identifiziert wird, wenn ein Wert einer Änderung der Funktion in Abhängigkeit der Position des Punkts entlang des Abschnitts um einen vorgegebenen Toleranzwert von einem vorgegebenen Schwellwert für die Änderung der Funktion abweicht,
wobei mit der von dem mindestens einen Parameter abhängigen Funktion eine Ist-Geometrie des Höhenprofils beschrieben wird, wobei die Ist-Geometrie mit einer für das Höhenprofil vorgesehenen Soll-Geometrie verglichen wird, wobei der Abschnitt als Unebenheit (2, 4, 6, 8) des Untergrunds (82) identifiziert wird, wenn die Ist-Geometrie um einen für die Soll-Geometrie vorgegebenen Toleranzwert von einem für die Soll-Geometrie vorgegebenen Schwellwert abweicht.

2. Verfahren nach Anspruch 1, bei dem Werte des Höhenprofils für den Untergrund (82) mit einem Sensor (84) zum Erfassen eines Umfelds des Kraftfahrzeugs (80) ermittelt werden.

3. Verfahren nach Anspruch 2, bei dem ermittelte Werte entlang des Abschnitts gefiltert werden.

4. Verfahren nach einem der voranstehenden Ansprüche, bei dem als Änderung der Funktion deren erste örtliche Ableitung in horizontaler Richtung entlang des Abschnitts verwendet wird.

5. Verfahren nach einem der voranstehenden Ansprüche, bei dem als Änderung der Funktion deren zweite örtliche Ableitung in horizontaler Richtung entlang des Abschnitts verwendet wird.

6. Verfahren nach einem der voranstehenden Ansprüche, bei dem die Form der Ist-Geometrie und eine Form der Soll-Geometrie durch die von dem mindestens einen Parameter abhängige Funktion zum Beschreiben des Höhenprofils entlang des Abschnitts definiert werden, wobei der mindestens eine Parameter der Funktion zum Beschreiben der Ist-Geometrie einen Ist-Wert und zum Beschreiben der Soll-Geometrie einen Soll-Wert aufweist.

7. Verfahren nach einem der voranstehenden Ansprüche, bei dem für eine identifizierte Unebenheit (2, 4, 6, 8) in horizontaler Richtung entlang des Abschnitts ein Anfang und ein Ende bestimmt werden.

8. Verfahren nach einem der voranstehenden Ansprüche, bei dem die Soll-Geometrie als Schablone für die Ist-Geometrie verwendet wird.

9. System zum Kontrollieren mindestens eines Aktors (90, 92) eines Fahrwerks eines Kraftfahrzeugs (80), mit dem ein Untergrund (82) zu befahren ist, wobei das System (81) mindestens einen Sensor (84) zum Erfassen eines Umfelds des Kraftfahrzeugs (80) und eine Datenverarbeitungseinrichtung (85) aufweist, wobei der mindestens eine Sensor (84) dazu ausgebildet ist, ein Höhenprofil des Untergrunds (82) zu erfassen, wobei die Datenverarbeitungseinrichtung (85) dazu ausgebildet ist, für einen Abschnitt des Untergrunds (82) zu analysieren, ob das Höhenprofil entlang dieses Abschnitts einen Wert aufweist, der um einen vorgegebenen Toleranzwert von einem Schwellwert abweicht, und eine Stellgröße zum Beaufschlagen des Aktors (90, 92) unter Berücksichtigung der identifizierten Unebenheit einzustellen, wenn das Kraftfahrzeug über die identifizierte Unebenheit (2, 4, 6, 8) fährt, wobei die Datenverarbeitungseinrichtung (85) dazu ausgebildet ist, den Abschnitt des Untergrunds (82) als Unebenheit (2, 4, 6, 8) zu definieren, wenn der Wert des Höhenprofils größer als der Schwellwert zuzüglich des Toleranzwerts ist,
**dadurch gekennzeichnet, dass**
eine Form des Höhenprofils entlang des Abschnitts durch eine trigonometrische Funktion zu beschreiben ist, wobei diese Funktion von mindestens einem Parameter abhängig ist und eine Abhängigkeit des Höhenprofils für einen Punkt des Untergrunds (82) von einer Position des Punkts entlang des Abschnitts definiert, wobei der Abschnitt als Unebenheit (2, 4, 6, 8) des Untergrunds (82) zu identifizieren ist, wenn ein Wert einer Änderung der Funktion in Abhängigkeit der Position des Punkts entlang des Abschnitts um einen vorgegebenen Toleranzwert von einem vorgegebenen Schwellwert für die Änderung der Funktion abweicht,wobei mit der von dem mindestens einen Parameter abhängigen Funktion eine Ist-Geometrie des Höhenprofils beschrieben wird, wobei die Ist-Geometrie mit einer für das Höhenprofil vorgesehenen Soll-Geometrie verglichen wird, wobei der Abschnitt als Unebenheit (2, 4, 6, 8) des Untergrunds (82) identifiziert wird, wenn die Ist-Geometrie um einen für die Soll-Geometrie vorgegebenen Toleranzwert von einem für die Soll-Geometrie vorgegebenen Schwellwert abweicht.

10. System nach Anspruch 9, das dazu ausgebildet ist, ein Verfahren nach einem der Ansprüche 1 bis 8 durchzuführen.

11. System nach Anspruch 9 oder 10, das in dem Kraftfahrzeug (80) angeordnet ist.

## Claims

1. Method for controlling at least one actuator (90, 92) of a chassis of a motor vehicle (80) used to travel over a ground (82), in which a height profile of the ground (82) is established, wherein for a section of the ground (82) an analysis is undertaken to determine whether the height profile along this section has a value that deviates from a threshold value by a predetermined tolerance value, and wherein a manipulated variable is set to act upon the actuator (90, 92), taking into account an identified unevenness (2, 4, 6, 8), when the motor vehicle (80) travels over the identified unevenness (2, 4, 6, 8), wherein the section of the ground (82) is defined as unevenness (2, 4, 6, 8), if the value of the height profile is greater than the threshold value plus the tolerance value, **characterised in that** a shape of the height profile along the section is described by means of a trigonometric function, wherein this function is dependent on at least one parameter and defines a dependence of the height profile for a point on the ground (82) on a position of the point along the section, wherein the section is identified as unevenness (2, 4, 6, 8) of the ground (82), if a value of a change of the function deviates by a predetermined tolerance value from a predetermined threshold value for the change of function depending on the position of the point along the section, wherein an actual geometry of the height profile is described with the function dependent on the at least one parameter, wherein the actual geometry is compared with a target geometry provided for the height profile, wherein the section is identified as unevenness (2, 4, 6, 8) of the ground (82), if the actual geometry deviates from a predetermined threshold value for the target geometry by a predetermined tolerance value for the target geometry.

2. Method according to claim 1, in which values of the height profile for the ground (82) are determined with a sensor (84) for establishing surroundings of the motor vehicle (80).

3. Method according to claim 2, in which determined values along the section are filtered.

4. Method according to any one of the preceding claims, in which, as change of the function, its first local derivative in horizontal direction along the section is used.

5. Method according to any one of the preceding claims, in which, as change of the function, its second local derivative in horizontal direction along the section is used.

6. Method according to any one of the preceding claims, in which the shape of the actual geometry and a shape of the target geometry are defined by means of the function, dependent on the at least one parameter, for describing the height profile along the section, wherein the at least one parameter of the function has an actual value for describing the actual geometry and a target value for describing the target geometry.

7. Method according to any one of the preceding claims, in which a start and an end are determined for an identified unevenness (2, 4, 6, 8) in horizontal direction along the section.

8. Method according to any one of the preceding claims, in which the target geometry is used as template for the actual geometry.

9. System for controlling at least one actuator (90, 92) of a chassis of a motor vehicle (80) to be used to travel over a ground (82), wherein the system (81) has at least one sensor (84) for establishing surroundings of the motor vehicle (80) and a data processing device (85), wherein the at least one sensor (84) is configured to establish a height profile of the ground (82), wherein, for a section of the ground (82), the data processing device (85) is configured to analyse whether the height profile along this section has a value that deviates from a threshold value by a predetermined tolerance value, and to set a manipulated variable to act upon the actuator (90, 92), taking into account the identified unevenness, when the motor vehicle travels over the identified unevenness (2, 4, 6, 8), wherein the data processing device (85) is configured to define the section of the ground (82) as unevenness (2, 4, 6, 8), if the value of the height profile is greater than the threshold value plus the tolerance value, **characterised in that** a shape of the height profile along the section is to be described by means of a trigonometric function, wherein this function is dependent on at least one parameter and defines a dependence of the height profile for a point on the ground (82) on a position of the point along the section, wherein the section is to be identified as unevenness (2, 4, 6, 8) of the ground (82), if a value of a change of the function deviates by a predetermined tolerance value from a predetermined threshold value for the change of function depending on the position of the point along the section, wherein an actual geometry of the height profile is described with the function dependent on the at least one parameter, wherein the actual geometry is compared with a target geometry provided for the height profile, wherein the section is identified as unevenness (2, 4, 6, 8) of the ground (82), if the actual geometry deviates from a predetermined threshold value for the target geometry by a predetermined tolerance value for the target geometry.

10. System according to claim 9, which is configured to perform a method according to any one of claims 1 to 8.

11. System according to claim 9 or 10, which is arranged in the motor vehicle (80).

## Revendications

1. Procédé de contrôle au moins d'un actionneur (90, 92) d'un mécanisme de roulement d'un véhicule automobile (80), avec lequel est parcouru un sous-sol (82), dans lequel est détecté un profil en hauteur du sous-sol (82), dans lequel on analyse pour une section du sous-sol (82) si le profil en hauteur le long de cette section présente une valeur, qui s'écarte d'une valeur de tolérance prédéfinie d'une valeur de seuil et dans lequel une grandeur de réglage pour alimenter l'actionneur (90, 92) est ajustée en tenant compte d'une inégalité identifiée (2, 4, 6, 8) lorsque le véhicule automobile (80) roule au-dessus de l'inégalité identifiée (2, 4, 6, 8), dans lequel la section du sous-sol (82) est définie comme inégalité (2, 4, 6, 8) lorsque la valeur du profil en hauteur est plus grande que la valeur de seuil plus la valeur de tolérance,
**caractérisé en ce que** :
une forme du profil en hauteur le long de la section est décrite par une fonction trigonométrique, dans lequel cette fonction dépend d'au moins un paramètre et définit une dépendance du profil en hauteur pour un point du sous-sol (82) à une position du point le long de la section,
dans lequel la section est identifiée comme inégalité (2, 4, 6, 8) du sous-sol (82) lorsqu'une valeur d'une variation de la fonction qui dépend de la position du point le long de la section s'écarte d'une valeur de tolérance prédéfinie d'une valeur de seuil prédéfinie pour la variation de la fonction, dans lequel on décrit une géométrie effective du profil en hauteur avec la fonction qui dépend du au moins un paramètre, dans lequel la géométrie effective est comparée à une géométrie théorique prévue pour le profil en hauteur, dans lequel la section est identifiée comme inégalité (2, 4, 6, 8) du sous-sol (82) lorsque la géométrie effective s'écarte d'une valeur de tolérance prédéfinie pour la géométrie théorique d'une valeur de seuil prédéfinie pour la géométrie théorique.

2. Procédé selon la revendication 1, dans lequel des valeurs du profil en hauteur pour le sous-sol (82) sont déterminées avec un capteur (84) pour détecter un environnement du véhicule automobile (80).

3. Procédé selon la revendication 2, dans lequel des valeurs déterminées sont filtrées le long de la section.

4. Procédé selon l'une quelconque des revendications précédentes, dans lequel on utilise comme variation de la fonction sa première dérivée locale dans la direction horizontale le long de la section.

5. Procédé selon l'une quelconque des revendications précédentes, dans lequel on utilise comme variation de la fonction sa seconde dérivée locale dans la direction horizontale le long de la section.

6. Procédé selon l'une quelconque des revendications précédentes,
dans lequel la forme de la géométrie effective et une forme de la géométrie théorique sont définies par la fonction dépendant du au moins un paramètre pour décrire le profil en hauteur le long de la section, dans lequel l'au moins un paramètre de la fonction présente une valeur effective pour décrire la géométrie effective et une valeur théorique pour décrire la géométrie théorique.

7. Procédé selon l'une quelconque des revendications précédentes, dans lequel on détermine un départ et une fin pour une inégalité identifiée (2, 4, 6, 8) dans la direction horizontale le long de la section.

8. Procédé selon l'une quelconque des revendications précédentes, dans lequel on utilise la géométrie théorique comme gabarit pour la géométrie effective.

9. Système de contrôle au moins d'un actionneur (90, 92) d'un mécanisme de roulement d'un véhicule automobile (80), avec lequel on doit parcourir un sous-sol (82), dans lequel le système (81) présente au moins un capteur (84) pour détecter un environnement du véhicule automobile (80) et un dispositif de traitement de données (85), dans lequel l'au moins un capteur (84) est conçu pour détecter un profil en hauteur (82), dans lequel le dispositif de traitement de données (85) est conçu pour analyser pour une section du sous-sol (82) si le profil en hauteur présente le long de cette section une valeur qui s'écarte une valeur de tolérance prédéfinie d'une valeur de seuil et ajuster une grandeur de réglage pour alimenter l'actionneur (90, 92) en tenant compte de l'inégalité identifiée lorsque le véhicule automobile roule au-dessus de l'inégalité identifiée (2, 4, 6, 8), dans lequel le dispositif de traitement de données (85) est conçu pour définir la section du sous-sol (82) comme inégalité (2, 4, 6, 8) lorsque la valeur du profil en hauteur est plus grande que la valeur de seuil plus la valeur de tolérance,
**caractérisé en ce que** :
une forme du profil en hauteur le long de la section est décrite par une fonction trigonométrique, dans lequel cette fonction dépend d'au moins un paramètre et définit une dépendance du profil en hauteur pour un point du sous-sol (82) à une position du point le long de la section, dans lequel la section doit être identifiée comme inégalité (2, 4, 6, 8) du sous-sol (82) lorsqu'une valeur d'une variation de la fonction qui dépend de la position du point le long de la section s'écarte d'une valeur de tolérance prédéfinie d'une valeur de seuil prédéfinie pour la variation de la fonction, dans lequel on décrit une géométrie effective du profil en hauteur avec la fonction qui dépend du au moins un paramètre, dans lequel la géométrie effective est comparée à une géométrie théorique prévue pour le profil en hauteur, dans lequel la section est identifiée comme inégalité (2, 4, 6, 8) du sous-sol (82) lorsque la géométrie effective s'écarte d'une valeur de tolérance prédéfinie pour la géométrie théorique d'une valeur de seuil prédéfinie pour la géométrie théorique.

10. Système selon la revendication 9, qui est conçu pour réaliser un procédé selon l'une quelconque des revendications 1 à 8.

11. Système selon la revendication 9 ou 10, qui est agencé dans le véhicule automobile (80).
